(19)

**Europäisches Patentamt**
**European Patent Office**
**Office européen des brevets**

(11) **EP 1 795 504 A1**

(12) **EUROPÄISCHE PATENTANMELDUNG**

(43) Veröffentlichungstag:
**13.06.2007 Patentblatt 2007/24**

(21) Anmeldenummer: **06007145.3**

(22) Anmeldetag: **04.04.2006**

(51) Int Cl.:
*C03B 5/193* (2006.01)          *C03B 5/235* (2006.01)
*F27D 3/16* (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **07.12.2005   DE 102005058452**

(71) Anmelder: **Linde Aktiengesellschaft**
**65189 Wiesbaden (DE)**

(72) Erfinder:
- **Görisch, Matthias**
  **90765 Fürth (DE)**
- **Mahrenholtz, Hans**
  **86567 Hilgertshausen (DE)**

(54) **Bubblerstein**

(57)     Die Erfindung betrifft einen Bubblerstein (2) zum Einbringen von zwei unterschiedlichen Gasen in eine Glasschmelze mit mindestens zwei Bohrungen (4, 6). Zur Erhöhung der Variabilität schließen diese einen Winkel $\alpha > 0$ miteinander ein.

EP 1 795 504 A1

**Beschreibung**

Die Erfindung betrifft einen Bubblerstein zum Einbringen von zwei unterschiedlichen Gasen in eine Glasschmelze nach dem Oberbegriff des Anspruchs 1.

Dieser Bubblerstein wird vor allem beim Läutern von anorganischen Verbindungen in geschmolzener Form, insbesondere von Glasschmelzen, eingesetzt. Bei der Herstellung von Glas ist es erforderlich, dem Schmelzprozess einen Läuterprozess nachzuschalten. Dabei hat das Läutern die Aufgabe, das erschmolzene Glas von physikalisch und chemisch gebundenen Gasen zu befreien. Die Gase müssen entfernt werden, um die Qualität des Endproduktes nicht zu beeinträchtigen.

Neben chemischen Läuterverfahren ist es möglich, Gasbestandteile dadurch aus der Schmelze auszutreiben, dass Gasblasen durch Einblasen eines externen Gases gezielt in die Schmelze eingebracht werden (Düsenblasverfahren, Bubbling) und einen Stoffaustausch bewirken. Aufgrund der Größe der Blasen wird in erster Linie eine Konvektion in der Schmelze erzwungen. Als treibende Kraft für den Stofftransport aus der Schmelze in die Blase wirkt der Konzentrationsunterschied zwischen der in der Schmelze gelösten Gase und der Konzentration des Gases in der Blase. Das Eindiffundieren von gasförmigen Bestandteilen ist mit einem Wachstum der Blase verbunden, das zur Erhöhung der Aufstiegsgeschwindigkeit führt. Ein sehr effektiver Stoffaustausch zwischen Schmelze und Blase wird durch eine große spezifische Oberfläche (sehr viele kleine Blasen) erreicht.

Ein entsprechender Bubblerstein ist aus der DE 100 46 709 A1 bekannt. Der dort Blasenspender genannte Stein besteht aus einem Porenkörper, der am Boden der Glaswanne angeordnet ist, und leitet sog. Mini-Gasblasen in die Schmelze.

Bubbling mit Luft ist seit vielen Jahren bekannt und wird zur gezielten Beeinflussung der Glasströmung und damit letztlich der Glasqualität verwendet. Durch die aufsteigenden Bläschen wird das umgebende "kalte" Glas an die Oberfläche transportiert.

In manchen Fällen kann auch mit reinem Sauerstoff anstelle von Luft gebubbelt werden, wobei man hier, zusätzlich zu der soeben beschriebenen Beeinflussung der Glasströmung, den Einfluss von weiteren Luftbestandteilen neben dem Sauerstoff ausschließen kann.

Es hat in der Vergangenheit Versuche mit dem Bubbling von Wasserdampf gegeben, die aber nicht erfolgreich waren, da dieser Wasserdampf der Glasschmelze Energie entzieht und sich damit nachteilig auf die Glasqualität auswirkt.

Aus der WO 2005/110933 A1 ist eine Vorrichtung zum Läutern von Glas bekannt, bei der ein Bubblerstein mit zwei Bohrungen verwendet wird, über die zwei unterschiedliche Gase von unten in die Glasschmelze eingeführt werden. Die beiden Bohrungen sind parallel zueinander angeordnet. Eine Bohrung führt ein brennbares Gas, die andere führt Sauerstoff. Die Gasblasen vereinigen sich oberhalb des Bubblersteins innerhalb der Gasschmelze, wo die Gasbestandteile miteinander reagieren. Beim Einführen von Wasserstoff als brennbarem Gas erfolgt die Knallgasreaktion, die relativ viel Energie einbringt. Die Blasen steigen als Wasserdampf weiter nach oben. Bei dieser Vorrichtung ist der Ort der Reaktion relativ zufällig und kaum beeinflussbar.

Aufgabe der Erfindung ist es daher, eine technische Möglichkeit vorzuschlagen, mit der zwei verschiedene Gase derart in den Boden einer Gasschmelzwanne zugeführt werden können, dass die Reaktionszone geometrisch definiert oder variiert werden kann.

Diese Aufgabe wird gelöst mit einem Bubblerstein mit den Merkmalen des Anspruchs 1. Ausgestaltungen der Erfindung sind Gegenstände von Unteransprüchen.

Der erfindungsgemäße Bubblerstein zeichnet sich dadurch aus, dass die beiden Bohrungen einen spitzen Winkel gegeneinander einschließen. Dies kann dadurch erreicht sein, dass eine Bohrung gerade verläuft und die andere in einem Winkel, oder dass beide Bohrungen zueinander geneigt und geneigt gegenüber der Senkrechten verlaufen. Dadurch wird erreicht, dass die Gase an einem definierten Punkt zusammentreffen, an dem dann, z.B. bei Verwendung von Wasserstoff und Sauerstoff, die Knallgasreaktion stattfindet. Der Winkel zwischen den beiden Bohrungen ist größer als 0 °, liegt bevorzugt zwischen 5 und 40 ° und besonders bevorzugt zwischen 10 und 20°.

In einer Ausführung der Erfindung sind innerhalb der Bohrungen ein oder zwei verschiebbare Düsenrohre vorgesehen, die bevorzugt aus hitzebeständiger Keramik bestehen. Diese(s) Rohr(e) kann/können ein- und ausgeschoben werden, wodurch der Reaktionspunkt in seiner Höhe verschoben werden kann. Die Reaktion kann damit den Erfordernissen der Glasschmelze bestens angepasst werden. Der sog. Bubblerstein enthält also mindestens zwei Bohrungen, die in einem spitzen Winkel gegeneinander geneigt sind, so dass ihre Fluchtrichtungen sich innerhalb der Glasschmelze treffen, wenn der Bubblerstein in dem Boden der Glasschmelzwanne eingelassen ist.

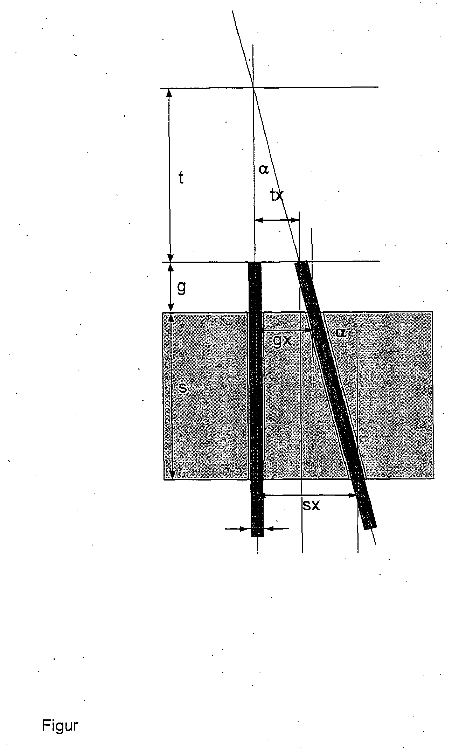

Eine Ausführung der Erfindung wird anhand der einzigen Figur gezeigt.

Die Figur zeigt den Bubblerstein 2 mit den beiden Bohrungen 4 und 6, wobei die Bohrung 4 hier senkrecht ausgeführt ist und die Bohrung 6 in einem Winkel $\alpha$ dagegen geneigt durchgeführt ist. Innerhalb der Bohrungen 4 und 6 befinden sich die Düsenrohre 8 und 10, die länger sind als die Dicke s des Bubblersteins 2 und die nach oben und unten verschoben werden können, wodurch ihre Spitzen auf eine bestimmte Höhe g innerhalb der Glasschmelze verschoben werden können. Auf diese Weise kann der Abstand der Gasaustritte $t_x$ den Gasschmelzbedingungen angepasst

werden.

Für die Größen t, $g_x$ und $\alpha$ gelten folgende Gleichungen:

$$t = \frac{-g \cdot t_x - s \cdot t_x}{t_x - s_x}$$

$$g_x = t_x + \frac{g \cdot t_x}{t}$$

$$\alpha = \arctan\left(\frac{s_x}{t + g + s}\right)$$

Ein bevorzugter Abstand zwischen den Düsen liegt zwischen 30 und 60 mm. Möglich sind jedoch auch Abstände zwischen 20 und 100 mm. Der Durchmesser der Bohrungen 4 oder 6 liegt bevorzugt bei 15 mm. Einige bevorzugte Maßangaben sind in der folgenden Tabelle enthalten:

| | | | |
|---|---|---|---|
| Minimaler Düsenabstand | tx | mm | 30 |
| Maximaler Abstand zur Steinoberfläche | g | mm | 150 |
| Abstand der Austritte an der Steinoberfläche | gx | mm | 63 |
| Steindicke | s | mm | 350 |
| Bohrungsabstand | sx | mm | 140 |
| Bohrwinkel | $\alpha$ | ° | 12,4 |

Dies führt dazu, dass sich bei unterschiedlichen Düsenabständen tx- unterschiedliche Abstände g der Austrittsstellen zur Steinoberfläche ergeben. Nach folgender Tabelle:

| tx' | mm | 60 | 50 | 40 | 30 |
|---|---|---|---|---|---|
| g | mm | 13,6 | 59,1 | 105 | 150 |

Der Abstand tx definiert also die Reaktionszone der austretenden und nach oben steigenden Gase in der Glasschmelze.

**Patentansprüche**

1. Bubblerstein (2) zum Einbringen von zwei unterschiedlichen Gasen in eine Glasschmelze mit mindestens zwei Bohrungen (4, 6), **dadurch gekennzeichnet, dass** diese eine Winkel $\alpha$ > 0 miteinander einschließen.

2. Bubblerstein (2) nach Anspruch 1, **dadurch gekennzeichnet, dass** der Winkel $\alpha$ zwischen 5 und 40 °, bevorzugt zwischen 10 und 20 ° liegt.

3. Bubblerstein (2) nach einem der vorhergehenden Ansprüche, **gekennzeichnet durch** eine oder zwei in den Bohrungen (4, 6) verschiebbare Düsenrohre (8, 10) die bevorzugt aus Keramik bestehen.

Figur

**Europäisches Patentamt**

**EUROPÄISCHER RECHERCHENBERICHT**

Nummer der Anmeldung

EP 06 00 7145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | WO 2005/110933 A (LINDE AKTIENGESELLSCHAFT; MAHRENHOLTZ, HANS) 24. November 2005 (2005-11-24) * Seite 5, Zeile 34 - Seite 6, Zeile 4; Abbildung 1 * ----- | 1 | INV. C03B5/193 C03B5/235 F27D3/16 |
| X | US 5 858 059 A (ABRAMOVICH ET AL) 12. Januar 1999 (1999-01-12) * Spalte 3, Zeile 56 - Spalte 4, Zeile 5; Abbildung 1 * ----- | 1 | |
| X | US 3 330 645 A (MOUSTIER EDOUARD DE ET AL) 11. Juli 1967 (1967-07-11) * Spalte 3, Zeilen 6-12; Abbildung 3 * ----- | 1 | |

RECHERCHIERTE SACHGEBIETE (IPC)

C03B
F27D
B22D

Der vorliegende Recherchenbericht wurde für alle Patentansprüche erstellt

| Recherchenort | Abschlußdatum der Recherche | Prüfer |
|---|---|---|
| Den Haag | 28. Juni 2006 | Creux, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**EP 1 795 504 A1**

## ANHANG ZUM EUROPÄISCHEN RECHERCHENBERICHT
## ÜBER DIE EUROPÄISCHE PATENTANMELDUNG NR.

EP 06 00 7145

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2006

| Im Recherchenbericht angeführtes Patentdokument | Datum der Veröffentlichung | Mitglied(er) der Patentfamilie | Datum der Veröffentlichung |
|---|---|---|---|
| WO 2005110933 A | 24-11-2005 | DE 102004022936 A1 | 08-12-2005 |
| US 5858059 A | 12-01-1999 | KEINE | |
| US 3330645 A | 11-07-1967 | AT 265341 B | 10-10-1968 |
| | | BE 635868 A | |
| | | DE 1433398 A1 | 21-11-1968 |
| | | ES 290538 A1 | 16-03-1964 |
| | | FR 1347014 A | 27-12-1963 |
| | | FR 1361541 A | 22-05-1964 |
| | | GB 1046864 A | 26-10-1966 |
| | | LU 44199 A1 | 03-10-1963 |
| | | NL 296346 A | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10046709 A1
- WO 2005110933 A1